Europäisches Patentamt

European Patent Office

Office européen des brevets

(19)

(11) Veröffentlichungsnummer : **0 043 144**
**B1**

(12) **EUROPÄISCHE PATENTSCHRIFT**

(45) Veröffentlichungstag der Patentschrift :
**23.05.84**

(21) Anmeldenummer : **81105154.9**

(22) Anmeldetag : **02.07.81**

(51) Int. Cl.³ : **E 04 C 2/26, E 04 B 1/94,
C 04 B 31/26, B 32 B 19/00**

(54) Verfahren zur Herstellung von feuerfesten Bauplatten.

(30) Priorität : **02.07.80 YU 1732/80**

(43) Veröffentlichungstag der Anmeldung :
**06.01.82 Patentblatt 82/01**

(45) Bekanntmachung des Hinweises auf die Patenterteilung : **23.05.84 Patentblatt 84/21**

(84) Benannte Vertragsstaaten :
**AT BE CH DE FR GB IT LI LU NL SE**

(56) Entgegenhaltungen :
**AT-B- 334 595
DE-B- 2 810 132
DE-U- 7 032 003
DE-U- 7 437 814
GB-A- 1 158 460**

(73) Patentinhaber : **BREST, Industrija pohistva n.sol.o.**

**YU-61380 Cerknica (YU)**

(72) Erfinder : **Zidar, Anton, Dipl.-Ing.
Kamna gorica n.h.
YU-61380 Cerknica (YU)**

(74) Vertreter : **von Füner, Alexander, Dr. et al
Patentanwälte v. Füner, Ebbinghaus, Finck Mariahilfplatz 2 & 3
D-8000 München 90 (DE)**

Jouve, 18, rue St-Denis, 75001 Paris, France

EP 0 043 144 B1

**Beschreibung**

Die Erfindung betrifft ein Verfahren zur Herstellung von unbrennbaren feuerfesten Bauplatten aus drei Schichten, die aus anorganischen Blähmaterialien, wie Vermiculit und Perlit sind, oder durch eine Kombination beider Materialien erhalten werden, wobei jedes Material für sich selbst eine Plattenschicht bildet.

Gegenstand der AT-B-334595 ist eine Leichtplatte, insbesondere Bauplatte, die ein anorganisches Blähmaterial und ein Bindemittel enthält, wobei sie mindestens drei aufeinanderfolgende Schichten aufweist, von denen jeweils neben dem Bindemittel die beiden äußeren Schichten zumindestens überwiegend Blähglimmer und die innere Schicht zumindestens überwiegend Perlit oder Bimsstein enthalten. Als Bindemittel kann ein duroplastisches Kunstharz und/oder ein anorganisches Bindemittel, insbesondere Wasserglas verwendet werden. Es hat sich jedoch gezeigt, daß diese Art von Platten noch nicht das Optimum an Unbrennbarkeit und mechanischen Eigenschaften aufweist. Im Hinblick auf diese Literaturstelle war es Aufgabe der Erfindung, ein Verfahren herauszufinden, mit dem die mechanischen Eigenschaften der feuerfesten Bauplatten noch weiterhin verbessert werden können, jedoch dermaßen, daß die Unbrennbarkeit hierdurch nicht schlechter wird.

In der DE-B-28 10 132 ist zwar beschrieben, daß man bei einem Verfahren zur Herstellung eines Baustoffkörpers, insbesondere eines plattenförmigen Baustoffkörpers, aus gebiähtem Vermiculit-Granulat, das in bestimmter Weise vorbehandelt ist, zumindest eine Teilmenge des durch die Besäumung und/oder die Ausschußstücke anfallenden Materialabfalls zerkleinert und gemeinsam mit zumindest einer Teilmenge des anfallenden Schleifstaubes dem gebiähten Vermiculit-Granulat beimischt, jedoch erschöpft sich die vorliegende Erfindung nicht darin, diese Maßnahme bei dem in der AT-B-334 595 beschriebenen Verfahren anzuwenden. Vielmehr kommen bei der vorliegenden Erfindung noch besondere Parameter bezüglich der einzusetzenden Materialien für die Mittelschicht und die Außenschicht, die voneinander verschiedene Zusammensetzungen haben, und Maßgaben über die Art der Beleimung sowie über die Verfestigung hinzu. Somit wird auch in den beiden Literaturstellen das erfindungsgemäße Verfahren nicht so beschrieben, daß es sich aus diesem Stande der Technik ergibt.

Neben diesen Überlegungen zum Stande der Technik kommt noch hinzu, daß durch die vorliegende Erfindung überraschende technische Vorteile erzielt werden, nämlich eine mindestens um den Faktor 2 erhöhte Biegefestigkeit, eine um den Faktor 5 verbesserte Schraubenauszugfestigkeit und vor allen Dingen die Nichtbrennbarkeit.

Aufgabe der Erfindung war es also auch, neben der Verbesserung der Feuerfestigkeit, die Technologie des Herstellungsverfahrens zu vereinfachen beispielsweise durch Wiederverwendung der Abfallstoffe wie der Besäumung.

Der Gegenstand der Erfindung ist in den Patentansprüche beschrieben. Er betrifft also ein Verfahren zum Herstellen von gepreßten, feuerfesten, aus anorganischem Blähmaterial bestehenden dreischichtigen Bauplatten, bei dem zunächst die Blähmaterialiengranulate, nämlich gebiähter Vermiculit oder gebiähter Perlit für die Außenschichten und/oder gebiähter Vermiculit oder gebiähter Perlit für die Innenschicht, mit Wasserglas als anorganisches Bindemittel und/oder mit duraplastischem Harz und/oder mit Monoaluminiumphosphat getrennt geleimt werden, danach eine erste 1/6 der Gesamtdicke einnehmende Schicht aus beleimtem Vermiculit oder beleimtem Perlit, darauf die mittlere, etwa 4/6 der Gesamtdicke einnehmende Schicht aus beleimtem Vermiculit und/oder beleimtem Perlit und schließlich darauf die zweite etwa 1/6 der Gesamtdicke einnehmende Schicht aus beleimtem Vermiculit oder beleimtem Perlit aufgeschüttet werden und diese Dreischichtschüttung nach einer Vorpreßstufe unter Anwendung von Druck und Wärme verfestigt wird, das gekennzeichnet ist durch die Verfahrensschritte, daß man

a) für die Außenschichten der Platte eine Mischung verwendet, die aus gebiähtem Vermiculit oder gebiähtem Perlit und einer Lösung aus Wasserglas mit 48-50 Bè und Harnstoff besteht und mit der der Vermiculit oder der Perlit beleimt sind, wobei der Anteil an Festsubstanz der Lösung bis zu 41 % und der Anteil an Feuchtigkeit der Mischung bis zu 40 % betragen, jeweils berechnet auf das atro-Gewicht des Vermiculits oder der Perlits,

b) für die Mittelschicht der Platte gebiähten Vermiculit und/oder gebiähten Perlit und die Abfälle verwendet, die weitgehend aus trocknen Abfällen der Produktion, nämlich aus dem beim Blähvorgang und der Kühlung von Granulat sowie der Zerspanung der Plattensäumlinge anfallenden Staub sowie aus zerkleinerten Besäumungsresten stammen, und man das Gemisch aus Vermiculit und/oder Perlit und den Abfällen mit einer etwa 70 %-igen Lösung von Phenolharz beharzt und mit einer 50 %-igen Lösung von Monoaluminiumphosphat und Harnstoff beleimt, wobei der Festkörpergehalt der beiden Komponenten bis zu 24 % beträgt, bezogen auf das atro-Gewicht des Gemisches, das Verhältnis der Festsubstanz des Phenolharzes zur Festsubstanz von Monoaluminiumphosphat bei 40 : 60 liegt, die Feuchtigkeit des beleimten Gemisches bis zu 18 % reicht und das beleimte Gemisch für die Mittelschicht bis zu 17,5 % weniger Festsubstanz an Bindemittel und bis zu 23,4 % weniger an Feuchtigkeit als das beleimte Vermiculitgranulat oder Perlitgranulat für die Außenschicht enthält,

c) die Komponenten, die als Bindemittel dienen, vor dem Beleimen auf eine Temperatur von 25 bis 30 °C temperiert und dann auf die Granulate getrennt aufsprüht, indem die gebiähten Granulate als herunterfallender Vorhang durch einen durch Spritzpistolen erzeugten Nebel aus dem Bindemittel

2

geleitet werden,

d) die Verfestigung der Dreischichtschüttung bei einer Temperatur zwischen 170 und 210 °C und so durchgeführt, daß ausgehend von einem hohen Anfangspreßdruck innerhalb bestimmter Zeitabstände der von den Heizplatten ausgeübte Druck auf den Preßling verringert wird.

Nach einer bevorzugten Ausführungsform verwendet man zum Auflösen von Monoaluminiumphosphat alle Abwässer, die im Herstellungsprozeß entstehen.

Es ist weiterhin bevorzugt, als Trennmittel zwischen der Dreischichtaufschüttung und den Heizplatten der Presse ein einseitig silikonisiertes Papier mit einer Grammzahl von 60-70 $g/m^2$ verwendet.

Besonders bevorzugt ist, daß Vermiculit einer Körnung von 0,35 bis 1 mm und geblähter Perlit einer Körnung bis 2,5 mm eingesetzt werden.

Es ist bekannt, daß beim Herstellen der Formkörper aus anorganischen Materialien, wie z. B. aus Glasfasern, Mineralwolle usw., vor allem dann, wenn größere Mengen der Bindemittelkomponenten verwendet werden, die Schwierigkeiten beim Verpressen der Formkörper in den Heizpressen gerade wegen der Abführung der entstehenden Dämpfe auftreten, welche während des Preßvorganges in den Formkörpern frei werden. Es sind Verfahren bekannt, wobei die entstehenden Dämpfe mittels Drahteinsätzen in Gitterform, befestigt und den Heizplatten der Presse, abgeführt werden oder aber das geschieht mittels einer besonders ausgeführten Presse, die Heizplatten in Form von perforierten Platten besitzt. Durch die erwähnten Lösungen ist ein laufendes und ungehindertes Entfernen der Dämpfe möglich, die während der Aushärtung der Presse entstehen, was auch die verkürzten Preßzeiten zur Folge hat.

Die oben genannten Lösungen zur Abführung der Dämpfe kommen aber im erfindungsgemäßen Verfahren nicht in Frage, weil in ihrer Anwesenheit am Pressenaustritt unglatte Platten erhalten würden, die nachträglich noch geschliffen werden müßten, was aber nach dem erfindungsgemäßen Verfahren nicht vorgesehen ist und zwar aus dem Grunde, weil das Schleifen der Platten eine zusätzliche Arbeitsoperation und hiermit verbundene höhere Kosten bedeuten würde. Gleichzeitig würde aber auch das Problem aktuell, wohin den Schleifstaub zu deponieren, vor allem dann, wenn man dünnere Platten als 16 mm herstellt.

Die Erfindung liegt in einer neuen technischen Lösung, die eine solche Ausführung der Press vorsieht, daß mittels des im voraus ausgearbeiteten Programms das Verpressen bzw. die Bedingungen programmiert werden können, was bedeutet, daß innerhalb der programmierten Zeitabstände der Druck von den Heizplatten auf den Preßkörper kleiner wird, damit das ungehinderte Entweichen der während des Preßvorganges entstehenden Dämpfe ermöglicht wird. Dieses Programm und die dazugehörende Ausführung der Presse spielen eine ähnliche Rolle wie die Presse mit den perforierten Heizplatten oder die Presse mit den Drahteinsätzen, die an die Heizplatten angebaut sind. Jedoch beeinflußt die Erfindung wesentlich die Geschwindigkeit der Erwärmung und hiermit die Preßzeiten, da auf diese Weise das rechtzeitige und ungehinderte Entweichen der Dämpfe gewährleistet ist, welche während des Preßvorganges in der Heizpresse entstehen. Andererseits beeinflußt aber die Erfindung auch wesentlich die Qualität der fertigen Platten selbst, weil keine Möglichkeiten gegeben sind, daß es wegen der sich in der Platte befindlichen Dämpfe zur Beschädigung der Platten kommen könnte.

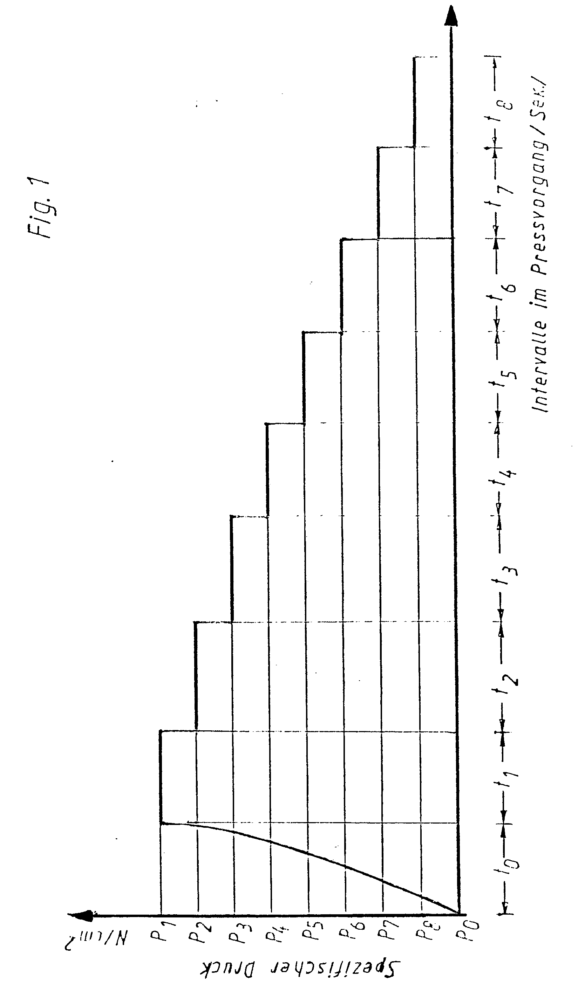

Die entsprechende Presse und das Programm des Preßvorganges, vor allem aber das Programm wird im einzelnen mittels des Diagramms in Fig. 1 erklärt. In diesem Diagramm sind an der Abszisse die Zeitabstände des Preßvorganges $t_0$, $t_1$, $t_2$, $t_3$, $t_4$, $t_5$, $t_6$, $t_7$, $t_8$ in Sekunden eingetragen, wobei die Preßzeit (t) der Summe der einzelnen Zeitabstände $t_0$, $t_1$, $t_2$, $t_3$ ... $t_8$ ($t = t_0 + t_1 + t_2 + t_3 + ... t_8$) gleich ist. Die spezifischen Preßdrücke werden an der Ordinate in $N/cm^2$ aufgetragen. Das Diagramm ist so konzipiert, daß zu den einzelnen Zeitabständen des Preßvorganges entsprechende spezifische Preßdrücke gehören, wie z. B. den Zeitabständen $t$ , $t_2$, $t$ ... $t$ die spezifischen Drücke $p$ , $p_2$, $p_3$ ... $p_8$ entsprechen. Aus dem Diagramm geht hervor, daß während des Preßvorganges in der Heizpresse der spezifische Preßdruck von einem Anfangswert $p_1$ auf den Endwert $p_0 = 0$ $N/cm^2$ abfällt. Die Heizpresse ist so ausgeführt, daß vom Preßdiagramm die entsprechenden Angaben für die Zeitabstände und spezifischen Drücke auf die Zeitrelais bzw. Manometer übertragen werden, welche sich im Steuerpult der Presse befinden und aufgrund der so programmierten Werte erfolgt dann der automatische Betrieb der Presse (die Regelung).

Anhand der genannten Lösungen, wie die dreischichtige Platte, die Kombination des anorganischen mit dem organischen Bindemittel und das Pressen in der Heizpresse aufgrund des Verpressungsprogramms, ist es möglich, die Preßzeiten um ca. 40 bis 50 % zu verkürzen.

Es ist bekannt, daß wenn das geblähte Vermiculit- oder Perlitgranulat mit einer der genannten Komponenten versetzt wird, die Tendenz zu bemerken ist, daß ein Teil des Granulats aus dem geblähten Material mit dem Bindemittel gesättigt ist, während der andere Teil gleichzeitig zu wenig benetzt wird. Die Folge davon ist, daß einzelne Plattenteile sehr dicht und hart sind, während die anderen Plattenteile äußerst leicht und spröde sind. Ein solcher dichter und harter Plattenteil wird so höhere Wärmeleitzahl als der leichte und spröde Teil aufweisen und wird mit Hinsicht auf die Isolations- und Brandschutzeigenschaften die Rolle des Schwächeren spielen.

Um die erwähnten Mängel vermeiden zu können, betrifft die Erfindung das dazu passende Verfahren zum Beleimen des Granulats aus Blähmineralien, wie es Perlit bzw. Vermiculit sind. Die Erfindung ermöglicht eine gleichmäßige Verteilung des Bindemittels auf der gesamten Oberfläche des geblähten Granulats mit dem Ziel, daß das Endprodukt, d. h. eine Platte mit möglichst gleichmäßig verteilter Dichte erhalten wird. Damit die genannten Verhältnisse erzielt werden, ist es erfindungsgemäß notwendig, folgendes zu machen :

Um bei dem Beleimen eine möglichst homogene Verteilung des Bindemittels auf der Oberfläche des geblähten Granulats zu erreichen, ist es notwendig, eine entsprechende Mischeinrichtung auszusuchen. Das ist ein Mischer für chargenweises Mischen. Er ist in Form einer rotierenden Trommel ausgeführt, welche an der inneren Trommelwand angeordnete Schaufeln hat, die zum Transport des Granulats in die obere Mischerlage während des Beleimungsvorganges dienen. Durch eine angemessene Umdrehungsgeschwindigkeit und durch die entsprechende Konstruktion der Schaufeln wird erreicht, daß das Granulat so hoch transportiert wird, daß beim Herunterfallen dem ganzen Mischerdurchschnitt nach ein Vorhang aus dem fallenden geblähten Granulat gebildet wird.

Daß zum Beleimen des Granulats mit dem Bindemittel Hochdruck-Airless-Pistolen verwendet werden, welche die Eigenschaft haben, daß sie den Vorhang aus dem herunterfallenden geblähten Granulat sehr gut (in Form von Nebel) mit dem Bindemittel besprühen und so eine homogene Beleimung des Granulats ermöglichen.

Damit die beste und möglichst gleichmäßige Beleimung des Granulats erreicht wird, ist es notwendig, neben der Auswahl einer entsprechenden Mischanlage und Pistolen die Bindemittelkomponenten vor dem Bedüsen auf die Temperatur von 25 bis 30 °C vorzuwärmen. Auf diese Wiese wird erzielt, daß die Viskosität der Komponenten wesentlich niedriger wird, was eine gleichmäßigere und vollständigere Beleimung der einzelnen Granulatkörner zur Folge hat und natürlich so eine gleichmäßigere Oberflächenverteilung der Feuchtigkeit im beleimten Granulat aufweist.

Es ist bekannt, daß in der letzten Zeit dem ökologischen Umweltschutz gegen durch die Industrie verursachte Verunreinigung immer mehr Bedeutung zukommt. Deshalb liegt ein besonderer Vorteil dieser Erfindung darin, daß erfindungsgemäß ein solches Herstellungsverfahren gewährleistet ist, wobei es zu keiner Verschmutzung der Umwelt kommen kann. Die Erfindung bietet die Lösung in dem sogenannten geschlossenen Kreissystem des Herstellungsverfahrens an. Das bedeutet, daß alle Abfälle, seien sie flüssig oder trocken, die beim Produktionsverfahren entstehen, nicht weggeworfen bzw. in die Umgebung abgegeben werden, sondern sie werden im Gegenteil zurück in den Produktionsprozeß geführt. Bei diesem Herstellungsverfahren entstehen folgende Abfälle, die die Verunreinigung der Umwelt beeinflussen könnten :

Der Staub, welcher beim Blähen des Granulats anfällt, sowie der Staub, der sich beim Zerspanen der Säumlinge bzw. der gefransten Kanten bildet, zerspante Abfälle, die beim Besäumen der Rohplatten anfallen, die Abwässer, welche beim Reinigen der Maschinen entstehen.

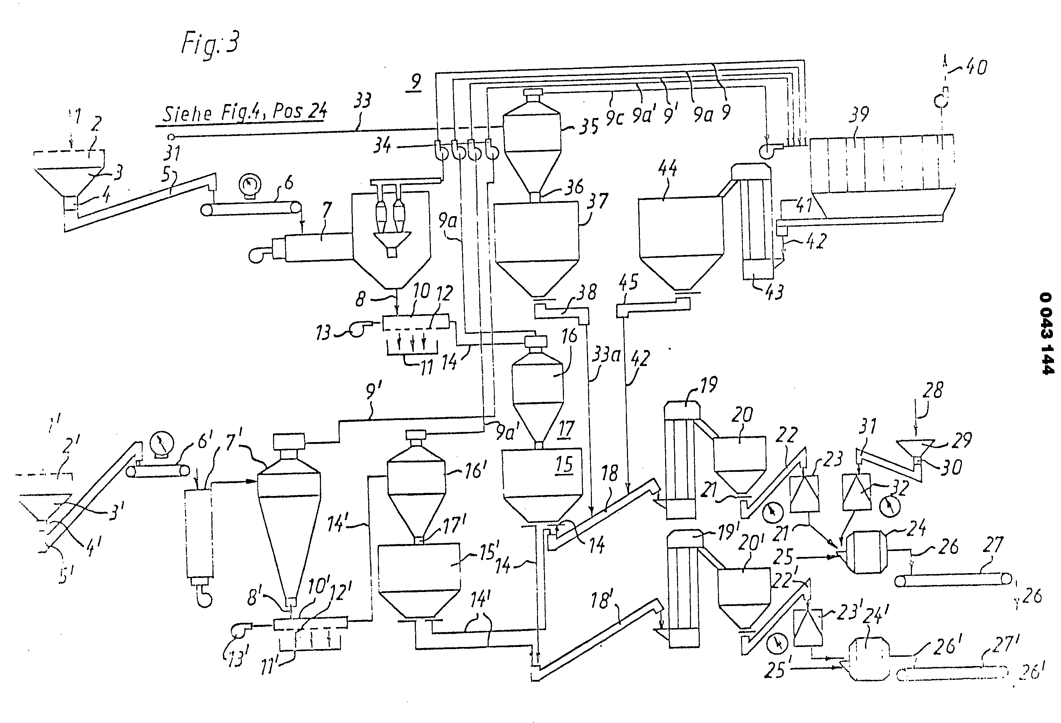

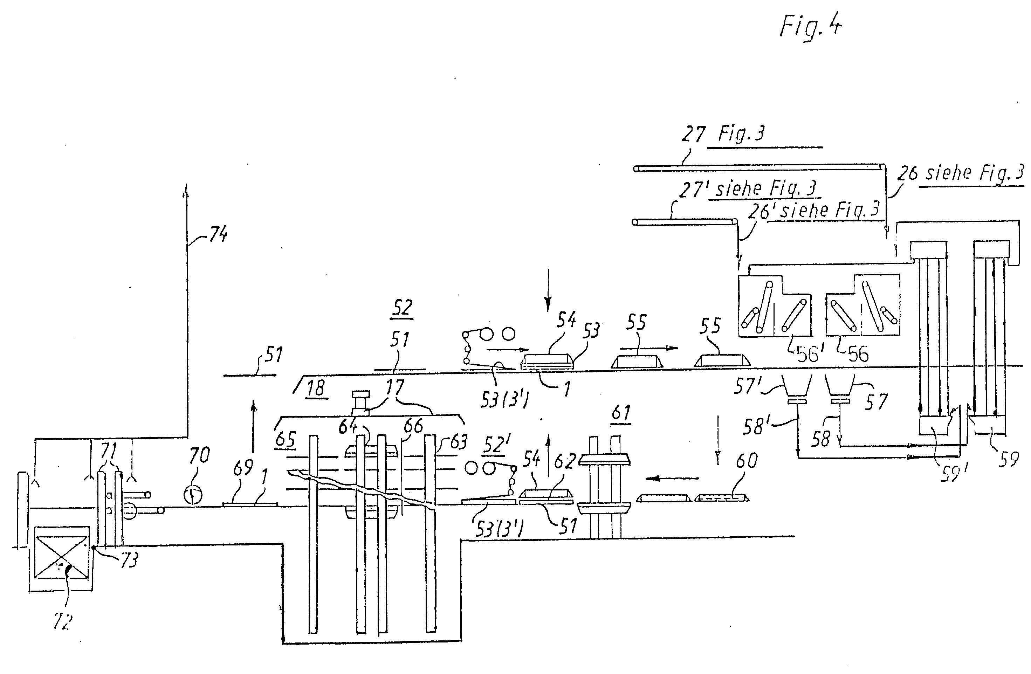

Die ersten zwei Arten der Abfälle werden durch den pneumatischen Transport vom Anfallort bis zu den Abscheidern bzw. Sackfiltern transportiert, wo sie im Ganzen von der Luft getrennt werden, so daß aus den Filtern vollkommen gereinigte Luft austritt. Die auf diese Weise abgeschiedene Luft und das zerkleinerte Granulat werden dann zu dem Blähmineral dosiert, das in die Mittelschicht der Platte geführt wird. Durch diese Lösung ist einerseits die Verschmutzung der Umwelt durch den Staub bzw. die zerkleinerten Abfälle unmöglich gemacht, andererseits bedeutet es aber einen wirtschaftlicheren Zutritt zum Ausnutzen der Rohstoffe. Diese Lösung, die auch der Gegenstand der Erfindung ist, ist näher in den Figuren 3 und 4 dargestellt, welche schematisch das Herstellungsverfahren für die Produktion der dreischichtigen feuerfesten Mineralplatte veranschaulichen.

Beim Reinigen bzw. Abwaschen der Einrichtungen, besonders noch dann, wenn Phenolharz als Bindemittel verwendet wird, taucht eine wichtige Frage auf : wohin mit diesen Abwässern ? Es sind die Verfahren zur Lösung bzw. Reinigung solcher Abwässer bekannt. Jedoch würde eine solche Lösung zusätzliche Investitionsgelder erfordern und später im Betrieb größere Betriebskosten bedeuten, wobei die Abwässer keinen Nutzen bringen könnten.

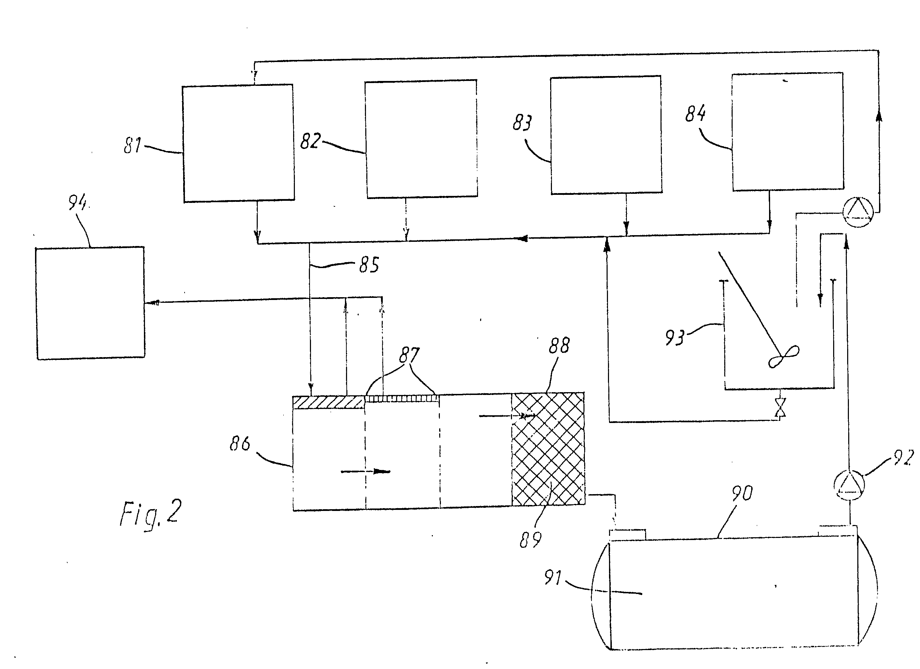

Die Erfindung gibt aber eine sehr einfache und wirtschaftliche Lösung dieses Problems. Die Lösung ist im sogenannten geschlossenen Kreissystem gegeben, welches schematisch in Fig. 2 gezeigt ist.

Erfindungsgemäß werden alle Abwässer, die während des Herstellungsprozesses anfallen, zum Auflösen von Monoaluminiumphosphat und der restlichen Komponenten im Kristallzustand verwendet und sie werden auf diese Weise im Ganzen neu zurück in den Produktionsprozeß geführt. Die Abwässer, die beim Reinigen der Mischanlagen und Pistolen 81 anfallen, weiter beim Rinigen der Kaschiermaschinen 82, beim Reinigen der Behälter 83, beim Reinigen der Plattenformen 84 entstehen und für die Zufuhr der Bindemittelkomponenten gedacht sind, laufen über die Kanäle 85 in der mechanischen Reinigungsanlage 86 zusammen, welche die Form einer Überlaufsenkgrube mit mehreren Kammern hat, wo die Festkörper des Granulats 87 stufenweise abgeschieden und zurück in den Blähofen 94 geführt werden. Die so gereinigte Flüssigkeit strömt durch den Filter 88, welcher mit Aktivkohle 89 gefüllt ist, in den größeren Tank 90 über, der als Behälter dient. Von hier wird das so gereinigte Wasser 91, das noch immer aufgelöste Bindemittelkomponente in kleinerer Konzentration enthält, mittels der Pumpe 92 in den Behälter mit dem Rührwerk 93 umgepumpt, welcher zum Auflösen der Komponenten im Kristallzustand dient (Monoaluminiumphosphat, Harnstoff), die zum Beleimen des Blähgranulats verwendet werden.

Erfindungsgemäß werden die einzelnen Bindemitteltypen miteinander so kombiniert, daß die Abwässer, die während des Produktionsprozesses entstehen, im Ganzen neu zurück in den Produktionsprozeß geführt werden, so daß es keinesfalls zum Problem kommen kann, wohin mit den Abwässern.

Das Herstellungsverfahren für die Produktion der dreischichtigen feuerfesten Platten wird erfindungsgemäß anhand der Fig. 3 und 4 näher erklärt. Fig. 3 veranschaulicht den Teil des Herstellungsverfahrens, der mit der Aufbereitung der Rohstoffe zu tun hat, d. h. sich mit dem Blähvorgang und der Beleimung des Granulats befaßt.

Der rohe Vermiculit 1 wird durch den Vibrationssichter 2 in den Trichter 3 zugegeben. Der Vibrationssichter 2 dient zum Abscheiden von Steinen, Holz, Metallstücken und anderen Zusätzen des Rohvermiculit 1. Das so gereinigte Granulat von Vermiculit 1 wird über die Zellenradschleuse 4 in die Schnecke 5 geführt, die eine stufenlose Regelung der Geschwindigkeit hat, weiter auf die Bandwaage 6 übergeben, die den momentanen Materialdurchfluß zeigt und gleichzeitig auch die Tagesdurchflußmenge von Vermiculit registriert, welches in den Blähofen 7 dosiert wird. Beim Durchgang durch den Ofen 7 wird der rohe Vermiculit bei ca. 800 bis 850 °C gebläht. Dabei vergrößert sich das Volumen des geblähten Vermiculits gegenüber dem rohen Vermiculit auf einen ca. 10-fachen Wert. Aus dem Blähofen 7 entweicht der Vermiculitstaub 9 über den Ventilator 34 in den Staubfilter 39, der aus Säcken besteht, welche zum Abscheiden des Staubes von der Luft dienen. Aus dem Filter tritt die so gereinigte Luft 40 aus. Das geblähte Vermiculitgranulat 8 wird dann über den pneumatischen Sichter 10 geführt, welcher die Funktion hat, vom geblähten Vermiculitgranulat 8 die anderen Verunreinigungen, wie z. B. den ungeblähten Vermiculit oder Magnetit 11 abscheiden zu können. Der pneumatische Sichter 10 ist so ausgeführt, daß man wunschgemäß durch die Abänderung der Klappenstellung 12 und durch die Abänderung der Luftdurchflußmenge 13 die totale oder nur teilweise Abscheidung des geblähten Vermiculitgranulats 14 vom ungeblähten Magnetit 11 erreichen kann. Magnetit 11 muß abgeschieden werden, weil er die Isolationseigenschaften der feuerfesten Platte sinken läßt, andererseits steigert aber seine Anwesenheit den Verschleiß der Transporteinrichtungen sowie den Verschleiß der Schneidewerkzeuge und der Zerspaner bei der Plattenbesäumung. Das so gereinigte Vermiculitgranulat 14 wird dann in die Kühlkammer 15 geführt, welche aus dem Abscheider 16 und der Zellenradschleuse 17 besteht. Nach dem Austritt aus der Kühlkammer 15 kann aber das Granulat von geblähtem Vermiculit 14 in die Schnecke 18 für die Mittelschicht und in die Schnecke 18' für die Außenschicht geführt werden, oder aber nur in die Schnecke 18' für die Außenschicht, was alles davon abhängt, welchen Plattentyp man produzieren möchte.

Der rohe Perlit 1' wird in Form des Granulats in den Trichter 3' über den Vibrationssichter 2' geführt, der die Aufgabe hat, vom Granulat größere Beimengungen wie Steine, Holz, Eisen usw. abzuscheiden. Von hier wird er über die Zellenradschleuse 4' geführt, über die Schnecke 5', die eine stufenlose Regelung der Geschwindigkeit hat und über die Bandwaage 6' (die gleich ausgeführt ist wie bei Vermiculit) in den vertikalen Blähofen 7' transportiert. Der Blähvorgang erfolgt bei über 850 °C. Vom Blähofen 7' entweicht der Perlitstaub 9' über den Ventilator 34 in den Staubfilter 39. Der geblähte Perlit 8' wird dann über den pneumatischen Sichter 10' geführt, der so ausgeführt ist, daß man durch die Abänderung der Klappenstellung 12' und durch die Abänderung der Luftdurchflußmenge 13' durch den Sichter 10' die totale oder nur teilweise Abscheidung der ungeblähten Partikel 11' erreichen kann, welche ein erhöhtes Schüttgewicht des geblähten Granulats einerseits und andererseits die Erhöhung der Wärmeleitfähigkeit der fertigen Platte beeinflussen, was sich natürlich negativ auf das Verhalten der Platte während des Brandversuches laut DIN 4102 auswirkt. Vom pneumatischen Sichter 10' wird der so gereinigte Perlit 14' in die Kühlkammer 15' geführt, welche aus dem Abscheider 16' und der Zellenradschleuse 17' besteht. Aus der Kühlkammer 15' kann der geblähte Perlit 14' in die Schnecke 18 (die Mittelschicht der Platte) und in die Schnecke 18' (die Außenschicht der Platte) geführt werden, oder aber nur in die Schnecke 18' (die Außenschicht), was alles davon abhängt, welchen Plattentyp man produzieren möchte.

Nach dem Austritt aus der Kühlkammer 15 oder 15' wird das geblähte Granulat 14 oder 14' (abhängig von der Rezeptur) in zwei Chargen eingeteilt, und zwar ins Granulat für die Mittelschicht und ins Granulat für die Außenschicht der Platte. Das Granulat für die Mittelschicht der Platte läuft über die Schnecke 18 und den Elevator 19 in das Silo 20. In die Schnecke 18 werden zum geblähten Granulat vom Silo 37 durch die Schnecke 38 mit der stufenlosen Regelung der Geschwindigkeit die zerkleinerten Säumlinge 33a zugegeben, die bei der Besäumung der Rohplatten 31 anfallen und durch den pneumatischen Transport 33 bis zum Abscheider 35 transportiert werden, wo die zerkleinerten Teilchen 33a vom Staub 9c, der in den Filter 39 geht, getrennt werden. Die zerkleinerten Teilchen 33a fallen vom Abscheider 35 über die Zellenradschleuse 36 in das Silo 37. Der Staub, der beim Blähvorgang 9 bzw. 9' und während der Kühlung der Abfälle 9a bzw. 9a' anfällt sowie der Staub 9c, der beim Zerspanen der Säumlinge entsteht, wird im Sackfilter 39 von der Luft 40 getrennt. Vom Filter 39 wird aber der Staub 42 über die Zellenradschleuse 41, den Elevator 43 in das Silo 44 geführt. Von hier wird er über die Schnecke 45, die eine stufenlose Regelung der Geschwindigkeit besitzt, in die Schnecke 18 dosiert, wo er sich mit dem geblähten Granulat 14 oder 14' und den zerkleinerten Abfällen 33a vermischt.

Auf dem Wege bis zum Silo 20 werden das geblähte Granulat 14 oder 14', die zerkleinerten Säumlinge 33a und der Staub 42 gründlich in eine homogenes Gemisch 21 vermischt, welches dann über die Schnecke 22, die Waage 23 in den Mischer 24 dosiert wird. In den Mischer 24 wird durch den Trichter 29, die Zellenradschleuse 30, die Schnecke 31 und die Traktwaage 32 ein Hydrophobiermittel 28 (z. B. Silikon) in Pulverform dosiert, welches die Aufgabe hat, die Wasseraufnahme der Platte beim eventuellen Kontakt der Platte mit Wasser zu verringern. Im Mischer 24 wird das Gemisch gleichmäßig mit den Bindemitteln 25 beleimt. Das so beleimte Gemisch 26 wird dann über das Transportband 27 in die Streumaschine 56 geführt, welche zum Einstreuen der Mittelschicht der Platte dient (Fig. 4).

Für die Außenschicht der Platte wird das Granulat des geblähten Minerals 14 oder 14' von der Kühlkammer 15 oder 15' (abhängig von der Rezeptur) über die Schnecke 18' und den Elevator 19' in das Silo 20' geführt. Vom Silo 20' wird es durch die Schnecke 22', die Taktwaage 23' in den Mischer 24' dosiert, wo es mit den Bindemitteln 25' beleimt wird. Das so beleimte Material 26' geht über das Transportband 27' in die Streumaschine 56' (Fig. 4), die zum Einstreuen der Außenschicht der Platte dient.

Die Fig. 4 zeigt erfindungsgemäß den zweiten Teil des Herstellungsverfahrens, d. h. den Teil, der mit dem Formen, Verpressen und Besäumen der Platten zu tun hat.

In diesem Teil des Herstellungsverfahrens werden die Platten eingestreut, verpreßt und besäumt. Der Materialtransport erfolgt mittels der Bleche und Formrahmen. Der Vorgang selbst wird erfindungsgemäß im weiteren näher beschrieben.

Auf leere und saubere Bleche 51, die aus Legierung Al-Mg-ji-1F 28 oder CrMo 4 bestehen, wird mittels der Papierauflegestation 52 automatisch das Trennpapier 53 gelegt, so daß die silikonisierte Papierseite nach oben gewandt ist. Als Trennpapier ist bestens das einseitig mit Silikon behandelte Papier 53 mit der Grammzahl von 60 bis 70 g/cm$^2$ geeignet. Das Trennpapier 53 muß deshalb vorgesehen werden, weil es später während der Aushärtung des Preßkuchens in der Heizpresse dessen Ankleben auf den Heizplatten der Presse verhindert. Diese Anlage 52 kann aber auch in der Produktion der leichten Bauplatten (350 bis 450 kg/m$^3$) gebraucht werden. In solchem Falle wird aber auf das Blech 51 kein Trennpapier, sondern im Gegenteil einseitig beleimtes Kraftpapier 3' (120 g/cm$^3$) gelegt, so daß die fertige Platte mit dem Kraftpapier kaschiert wird. Die leichten Bauplatten müssen aus dem Grunde mit dem Papier 53' kaschiert werden, weil sie an und für sich keine guten mechanischen Eigenschaften haben und auf diese Weise werden dieselben entsprechend verbessert. Auf das Blech mit dem aufgelegten Trennpapier 53 wird der Formrahmen 54 aufgesetzt, welcher samt dem Blech 51 und dem Papier 53, 53' eine Form 55 bildet. Die Form 55 wird dann reversierend unter den beiden Streumaschinen 56' und 56 durchgefahren.

Das Einstreuen des beleimten Materials geschieht so, daß zuerst die untere Deckschicht der Platte beim Durchfahren der Form 55 unter der Streumaschine 56' gestreut wird, dann erfolgt beim Durchfahren der Form 55 unter der Streumaschine 56 hin und zurück die Streuung der Mittelschicht der Platte, gefolgt zuletzt von der Streuung der oberen Deckschicht der Platte während der Rückfahrt der Form 55 unter der Streumaschine 56'. Das an den Streumaschinen überstreute Material 58', 58, d. h. das Material, das durch die Streumaschinen 56', 56 in dem Moment eingestreut wird, wo sich unten keine Form 55 befindet, wird mittels der Transportbänder 57', 57 und Elevatoren 59', 59 zurück in die Streumaschinen 56', 56 geführt. Der so gestreute Kuchen 60 wird in der Form 55 in die Vorpresse 61 befördert, wo er auf 30 % der ursprünglichen Stärke vorgepreßt wird. Am Austritt aus der Vorpresse 61 wird der geformte Vorpreßling 62 samt dem Blech 51 von dem Formrahmen 54 getrennt. Der Formrahmen 54 wird dann quertransportiert und auf das mit Papier 53, 53' belegte Blech 51 abgesenkt und so die Form 55 gebildet. Das Blech 51 samt dem Vorpreßling 62 wird im Durchfahren durch die Anlage 52' mit dem Trennpapier 53 oder mit dem bleimten Natronpapier 53' belegt, abhängig davon, was man produzieren möchte. Der so belegte Vorpreßling wird samt dem Blech 51 in die Beschickvorrichtung 63 eingeschoben. Sobald diese voll ist, werden die Vorpreßlinge in die hydraulische Mehretagen-Heizpresse 64 eingefahren.

Damit man mit diesem Herstellungsverfahren das Schleifen der fertigen Platten und hiermit verbunden auch die Kosten und den beim Schleifen anfallenden Staub vermeidet, ist die Presse so konstruiert, daß es während des Preßvorgangs zu keinem Durchbiegen der Heizplatten kommt. Um die genannten Anforderungen befriedigen zu können, müssen auch die Distanzleisten genau hergestellt werden, d. h. innerhalb der entsprechenden Toleranzen liegen, und sie müssen vor dem Schließen der Presse mittels Druckluft abgeblasen werden, damit das Granulat nicht zwischen die Distanzleiste und die Heizplatte gelangen kann, was selbstverständlich die Stärke der fertigen Platte beeinflussen würde. Damit keine Wärmeabstrahlung von der Presse aus auf die Vorpreßlinge 62 ausgeübt wird, ist zwischen dem Beschickkorb 63 und der Presse 64 eine Schütztür 66 angeordnet. Nach dem beendeten Preßvorgang werden die Rohplatten 69 samt den Blechen 51 in den Entleerkorb 65 hineingeschoben. Vom Entleerkorb 65 werden die Platten 69 hintereinander ausgeschoben, wonach das Abziehen vom Trennpapier 53 erfolgt. Dann werden die Rohplatten 69 von den Blechen 51 abgenommen, die in die Ausgangsposition quertransportiert werden. Die Rohplatten 69 werden nun auf der Waage 70 abgewogen, an der Besäumsäge 71 erfolgt aber die Längs- und Querbesäumung der Platten auf die Netto-Abmessungen. Nach dem Austritt aus der Besäumsäge werden die Platten automatisch auf die Hebebühne 72 abgestapelt, wo sie den Stapel 73 bilden. Bei der Längs- und Querbesäumung werden die Plattensäumlinge gleichzeitig zerkleinert und durch den pneumatischen Transport 74 zurück in den Produktionsprozeß geführt, so wie es in Fig. 3 (33) gezeigt ist.

Der Gegenstand dieser Erfindung wird näher an den nachstehenden Beispielen beschrieben, die anhand der genannten Lösungen und des beschriebenen Herstellungsverfahrens durchgeführt wurden.


Beispiel 1


gibt die Rezeptur zur Herstellung einer dreischichtigen feuerfesten Vermiculitplatte, 19 mm stark, an :

6

a) Höhenaufteilung vom Preßkuchen mit Hinsicht auf die einzelnen Schichten :

| | |
|---|---|
| 1/6 Außenschicht | 14 mm |
| 4/6 Mittelschicht | 56 mm |
| 1/6 Außenschicht | 14 mm |

b) Rezeptur für die Außenschicht :

75 kg aufgeblähter Vermiculit der Körnung 0,35 bis 1 mm werden leicht mit einer Lösung von Magnesium-Fluorsilikat besprüht, bis der pH-Wert leicht sauer wird. Das so besprühte Granulat wird dann mit ca. 42 l Wasserlösung von Wasserglas 48 bis 50 Bè beleimt, welcher vorher noch 2,2 kg trockener Harnstoff zugegeben wurden, wobei die Festsubstanz von Wasserglas gegenüber dem atro-Gewicht von Vermiculit bis zu 40,8 % beträgt und der Feuchtigkeitsgehalt bis zu 40,8 %.

c) Rezeptur für die Mittelschicht :

Zu 75 kg des Gemisches, das aus dem geblähten Vermiculit der Körnung 0,35 bis 1 mm, den zerkleinerten Abfällen von der Besäumung und dem Staub, der beim Blähvorgang, der Vermiculitkühlung und der Zerkleinerung anfällt, besteht, werden 2 kg Silikonpulver zugegeben. Dieses Gemisch wird dann separat mit 8 l einer ca. 70 %-igen Lösung von Phenolharz ($\rho = 1{,}2$ g/cm$^3$) beharzt und mit 14 l einer 50 %-igen Lösung von Monoaluminiumphosphat der Dichte 1,5 g/cm$^3$ beleimt, in der vorher noch 2,2 kg trockener Harnstoff aufgelöst wurden, wobei das Verhältnis der Festsubstanz von Monoaluminiumphosphat zur Festsubstanz von Phenolharz 60 : 40 ist. Dabei betragen der Festkörpergehalt der beiden Komponenten vom Bindemittel 23,3 %, berechnet auf atro-Gewicht des Materials, der Feuchtigkeitsgehalt in dem so beleimten Material aber 17,4 %.

Ein Vergleich der Rezepturen für beide Schichten zeigt, daß die Außenschicht bis zu 17,5 % mehr Bindemittel als die Mittelschicht enthält, was bedeutet, daß das beleimte Granulat in der Außenschicht bis zu 23,4 % mehr Feuchtigkeit als das beleimte Granulat in der Mittelschicht enthält.

d) Preßbedingungen :

Druck an der Vorpresse 20 bis 30 N/cm$^2$.
Programm für den Preßvorgang (siehe das Diagramm in Fig. 1).

a) Intervalle im Preßvorgang

| Sekunden | | | | | | | | | |
|---|---|---|---|---|---|---|---|---|---|
| $t_0$ | $t_1$ | $t_2$ | $t_3$ | $t_4$ | $t_5$ | $t_6$ | $t_7$ | $t_8$ | $t$ |
| 3 | 3 | 300 | 300 | 319 | 120 | 50 | 50 | 50 | 1 187 |

b) Preßdrücke

| N/cm$^2$ | | | | | | | | |
|---|---|---|---|---|---|---|---|---|
| $p_0$ | $p_1$ | $p_2$ | $p_3$ | $p_4$ | $p_5$ | $p_6$ | $p_7$ | $p_8$ |
| 0-130 | 130 | 117 | 91 | 78 | 71,5 | 39 | 26,4 | 10 |

Preßtemperatur 190 °C

e) Technische Charakteristika der verpreßten Platten :

| | |
|---|---|
| Stärke | 19 ± 0,2 mm |
| Raumgewicht | 690 kg/m$^3$ |
| Biegefestigkeit | 4,41 bis 4,90 N/mm$^2$ |
| Zugfestigkeit | 0,31 bis 0,39 N/mm$^2$ |
| Schraubenauszugfestigkeit | 588,40N |
| Baustoffklasse nach DIN 4102, | |

## 0 043 144

Teil 1, Ausgabe Mai 1981,             A2
Brennbarkeit nach IMCO          nicht brennbar
Konstruktion nach SOLAS 74          B 15

### Beispiel 2

gibt die Rezeptur zur Herstellung einer dreischichtigen feuerfesten Perlitplatte, 19 mm stark, an :

a) Höhenaufteilung vom Preßkuchen mit Hinsicht auf die einzelnen Schichten :

| | |
|---|---|
| 1/6 Außenschicht | 15 mm |
| 4/6 Mittelschicht | 60 mm |
| 1/6 Außenschicht | 15 mm |

b) Rezeptur für die Außenschicht :

75 kg aufgeblähter Perlit der Körnung 0 bis 2,5 mm mit dem Schüttgewicht von 100 bis 120 kg/m$^3$ werden leicht mit einer Lösung von Magnesium-Fluorsilikat besprüht, bis sich der pH-Wert ändert. Das so besprühte Granulat wird dann mit ca. 42 l der Wasserlösung von Wasserglas 48 bis 50 Bè beleimt, welcher vorher noch 2,2 kg trockener Harnstoff zugegeben wurden, wobei der Anteil von Wasserglas gegenüber dem atro-Gewicht von Vermiculit bis zu 40,8 % beträgt, berechnet auf die Festsubstanz. Das beleimte Granulat weist aber so bis zu 40,8 % Feuchtigkeit auf, berechnet auf atro-Gewicht von Vermiculit.

c) Rezeptur für die Mittelschicht :

Zu 75 kg des Gemisches, das aus dem geblähten Perlit der Körnung 0 bis 2,5 mm, den zerkleinerten Abfällen von der Besäumung und dem Staub, der beim Blähvorgang, der Kühlung und der Zerkleinerung anfällt, besteht, werden 2 kg Silikonpulver zugegeben. Dieses Gemisch wird dann separat mit 28 l einer ca. 70 %-igen Lösung von Phenolharz der Dichte 1,2 g/cm¹ beharzt und mit 14 l einer 50 %-igen Lösung von Monoaluminiumphosphat der Dichte 1,5 g/cm¹ beleimt, in der vorher 2,2 kg trockener Harnstoff aufgelöst wurden, wobei das Verhältnis der Festsubstanz von Monoaluminiumphosphat zur Festsubstanz von Phenolharz 60 : 40 beträgt. Der Festkörpergehalt der beiden Komponenten vom Bindemittel beträgt im so beleimten Material 23,3 %, der Feuchtigkeitsgehalt aber 17,4 %, berechnet auf atro-Gewicht von Perlit.

Ein Vergleich der Rezepturen für die beiden Schichten zeigt, daß die Außenschicht bis zu 17,5 % mehr Festsubstanz des Bindemittels als die Mittelschicht enthält, berechnet auf atro-Gewicht des Granulats. Das bedeutet, daß das beleimte Granulat in der Außenschicht bis zu 23,4 % mehr Feuchtigkeit als das Granulat in der Mittelschicht enthält.

d) Preßbedingungen :

Druck an der Vorpresse 50 bis 80 N/cm
Programm des Preßvorgangs (siehe Diagramm Fig. 1).

a) Intervalle im Preßvorgang :

| | Sekunden | | | | | | | | |
|---|---|---|---|---|---|---|---|---|---|
| $t_0$ | $t_1$ | $t_2$ | $t_3$ | $t_4$ | $t_5$ | $t_6$ | $t_7$ | $t_8$ | $t$ |
| 3 | 5 | 288 | 300 | 319 | 120 | 50 | 50 | 40 | 1 187 |

b) Preßdrücke

| | N/cm$^2$ | | | | | | | |
|---|---|---|---|---|---|---|---|---|
| $p_0$ | $p_1$ | $p_2$ | $p_3$ | $p_4$ | $p_5$ | $p_6$ | $p_7$ | $p_8$ |
| 0-184 | 184 | 117 | 91 | 78 | 71,5 | 39 | 26,4 | 10 |

Preßtemperatur 190 °C

e) Technische Charakteristika der verpreßten Platten :

| | |
|---|---|
| Stärke | 19 ± 0,2 mm |
| Raumgewicht | 680 kg/m$^3$ |
| Biegefestigkeit | 3,92 bis 4,41 N/mm$^2$ |
| Zugfestigkeit | 0,31 bis 0,34 N/mm$^2$ |
| Schraubenauszugfestigkeit | 490,33 bis 588,40 N |
| Baustoffklasse nach DIN 4102 Teil 1, Ausgabe Mai 1981 | A2 |
| Brennbarkeit nach IMCO | nicht brennbar |
| Konstruktion nach SOLAS 74 | B15 |

Beispiel 3

gibt die Rezeptur zur Herstellung einer dreischichtigen feuerfesten Vermiculit-Perlit-Platte, 19 mm stark, an :

a) Höhenaufteilung des Preßkuchens mit Hinsicht auf die einzelnen Schichten :

| | |
|---|---|
| 1/6 Außenschicht | 14,5 mm |
| 4/6 Mittelschicht | 58   mm |
| 1/6 Außenschicht | 14,5 mm |

b) Die Rezeptur für die Außenschicht ist gleich wie im Beispiel 1.

c) Die Rezeptur für die Mittelschicht ist gleich wie im Beispiel 2.

d) Preßbedingungen :

Druck an der Vorpresse 40 bis 70 N/cm$^2$
Programm für den Preßvorgang (siehe das Diagramm — Fig. 1).

a) Intervalle im Preßvorgang :

| | | | | Sekunden | | | | | |
|---|---|---|---|---|---|---|---|---|---|
| $t_0$ | $t_1$ | $t_2$ | $t_3$ | $t_4$ | $t_5$ | $t_6$ | $t_7$ | $t_8$ | $t$ |
| 3 | 5 | 288 | 300 | 319 | 120 | 50 | 50 | 40 | 1 187 |

b) Preßdrücke :

| | | | | N/cm$^2$ | | | | |
|---|---|---|---|---|---|---|---|---|
| $p_0$ | $p_1$ | $p_2$ | $p_3$ | $p_4$ | $p_5$ | $p_6$ | $p_7$ | $p_8$ |
| 0-210 | 210 | 117 | 91 | 78 | 71,5 | 35 | 26,4 | 10 |

Preßtemperatur 190 °C

e) Technische Charakteristika der verpreßten Platten :

| | |
|---|---|
| Stärke | 19 ± 0,3 mm |
| Dichte | 700 kg/m |
| Biegefestigkeit | 4,90 bis 5,88 N/mm |
| Zugfestigkeit | 0,39 N/mm$^2$ |
| Schraubenauszugfestigkeit | 539,40 bis 637,43 N |
| Baustoffklasse nach DIN 4102, Teil 1, Ausgabe Mai 1981, | A2, |
| Brennbarkeit nach IMCO | nicht brennbar |
| Konstruktion nach SOLAS 74 | B 15 |

Anhand der oben genannten Rezepturen ist es erfindungsgemäß möglich, auch leichtere Platten mit dem Raumgewicht zwischen 350 und 450 kg/m³ herzustellen, welche jedoch während des Produktionsprozesses mit Natronpapier (120 g/m') kaschiert werden müssen, damit einige von ihren mechanischen Werten hierdurch verbessert werden.

**Ansprüche**

1. Verfahren zum Herstellen von gepreßten, feuerfesten, aus anorganischem Blähmaterial bestehenden dreischichtigen Bauplatten, bei dem zunächst die Blähmaterialiengranulate, nämlich geblähter Vermiculit oder geblähter Perlit für die Außenschichten und/oder geblähter Vermiculit oder geblähter Perlit für die Innenschicht, mit Wasserglas als anorganisches Bindemittel und/oder mit duroplastischem Harz und/oder mit Monoaluminiumphosphat getrennt beleimt werden, danach eine erste 1/6 der Gesamtdicke einnehmende Schicht aus beleimtem Vermiculit oder beleimtem Perlit, darauf die mittlere, etwa 4/6 der Gesamtdicke einnehmende Schicht aus beleimtem Vermiculit und/oder beleimtem Perlit und schließlich darauf die zweite etwa 1/6 der Gesamtdicke einnehmende Schicht aus beleimtem Vermiculit oder beleimtem Perlit aufgeschüttet werden und diese Dreischichtschüttung nach einer Vorpreßstufe unter Anwendung von Druck und Wärme verfestigt wird, gekennzeichnet durch die Verfahrensschritte, daß man

a) für die Außenschichten der Platte eine Mischung verwendet, die aus geblähten Vermiculit oder geblähtem Perlit und einer Lösung aus Wasserglas mit 48-50 Bè und Harnstoff besteht und mit der der Vermiculit oder der Perlit beleimt sind, wobei der Anteil an Festsubstanz der Lösung bis zu 41 % und der Anteil an Feuchtigkeit der Mischung bis zu 40 % betragen, jeweils berechnet auf das atro-Gewicht des Vermiculits oder der Perlits,

b) für die Mittelschicht der Platte geblähten Vermiculit und/oder geblähten Perlit und die Abfälle verwendet, die weitgehend aus trocknen Abfällen der Produktion, nämlich aus dem beim Blähvorgang und der Kühlung von Granulat sowie der Zerspanung der Plattensäumlinge anfallenden Staub sowie aus zerkleinerten Besäumungsresten stammen, und man das Gemisch aus Vermiculit und/oder Perlit und den Abfällen mit einer etwa 70 %-igen Lösung von Phenolharz beharzt und mit einer 50 %-igen Lösung von Monoaluminiumphosphat und Harnstoff beleimt, wobei der Festkörpergehalt der beiden Komponenten bis zu 24 % beträgt, bezogen auf das atro-Gewicht des Gemisches, das Verhältnis der Festsubstanz des Phenolharzes zur Festsubstanz von Monoaluminiumphosphat bei 40 : 60 liegt, die Feuchtigkeit des beleimten Gemisches bis zu 18 % reicht und das beleimte Gemisch für die Mittelschicht bis zu 17,5 % weniger Festsubstanz an Bindemittel und bis zu 23,4 % weniger an Feuchtigkeit als das beleimte Vermiculitgranulat oder Perlitgranulat für die Außenschicht enthält,

c) die Komponenten, die als Bindemittel dienen, vor dem Beleimen auf eine Temperatur von 25 bis 30 °C temperiert und dann auf die Granulate getrennt aufsprüht, indem die geblähten Granulate als herunterfallender Vorhang durch einen durch Spritzpistolen erzeugten Nebel aus dem Bindemittel geleitet werden,

d) die Verfestigung der Dreischichtschüttung bei einer Temperatur zwischen 170 und 210 °C und so durchführt, daß ausgehend von einem hohen Anfangspreßdruck innerhalb bestimmter Zeitabstände der von den Heizplatten ausgeübte Druck auf den Preßling verringert wird.

2. Verfahren nach Anspruch 1, dadurch gekennzeichnet, daß man zum Auflösen von Monoaluminiumphosphat alle Abwässer verwendet, die im Herstellungsprozeß entstehen.

3. Verfahren nach Anspruch 1 oder 2, dadurch gekennzeichnet, daß man als Trennmittel zwischen der Dreischichtaufschüttung und den Heizplatten der Presse ein einseitig silikonisiertes Papier mit einer Grammzahl von 60-70 g/m² verwendet.

4. Verfahren nach einem der Ansprüche 1, 2 oder 3, dadurch gekennzeichnet, daß Vermiculit einer Körnung von 0,35 bis 1 mm und geblähter Perlit einer Körnung bis 2,5 mm eingesetzt werden.

**Claims**

1. A method of manufacturing pressed, fireproof, three-ply building boards made from inorganic expanded material, in which method the granules of expanded material, that is to say expanded vermiculite or expanded perlite for the outer layers and/or expanded vermiculite or expanded perlite for the inner layer, are first separately glued with water glass as an inorganic bonding agent and/or with thermosetting resin and/or with monoaluminium phosphate, a first layer of glued vermiculite or glued perlite occupying 1/6 of the total thickness is then deposited, the centre layer of glued vermiculite and/or glued perlite occupying approximately 4/6 of the total thickness is deposited thereon and, finally, the second layer of glued vermiculite or glued perlite occupying approximately 1/6 of the total thickness is finally deposited thereon and, after a pre-pressing stage, this three-layer deposit is solidified under the application of pressure and heat, characterised by the method steps in which

a) a mixture comprising expanded vermiculite or expanded perlite and a solution of water glass with 48-50 Bè and urea is used for the outer layers of the board and is used to glue the vermiculite or the perlite, the proportion of solids in the solution being up to 41 % and the proportion of moisture in the mixture being up to 40 %, in each case calculated to the weight of the vermiculite or of the perlite each in its absolutely dry state,

b) expanded vermiculite and/or expanded perlite and the waste products largely originating from dry waste products, namely dust occuring during expanding and the cooling of granulated material and the machining of the edges of the boards, and crushed trimming residues, are used for the centre layer of the board, and the mixture of vermiculite and/or perlite and the waste products is resinified with an approximately 70 % solution of phenolic resin and is glued with a 50 % solution of monoaluminium phosphate and urea, the solids content of the two components being up to 24 % relative to the weight of the mixture in its absolutely dry state, the ratio of the solids of the phenolic resin to the solids of the monoaluminium phosphate being 40 : 60, the moistness of the glued mixture being up to 18 %, and the glued mixture for the centre layer containing up to 17.5 % less solids in the bonding agent and up to 23.4 % less moisture than the glued granulated vermiculite or granulated perlite for the outer layer,

c) the components serving as a bonding agent are tempered to a temperature of from 25 to 30 °C before glueing and are then sprayed separately onto the granulated material by conducting the expanded granulated material as a falling curtain though a mist produced by spray guns from the bonding agent,

d) the three-layer deposit is solidified at a temperature between 170 and 210 °C, such that, commencing from a high initial pressure, the pressure exerted by the heating plates on the article being pressed is reduced within predetermined intervals of time.

2. A method as claimed in claim 1, characterised in that all the waste waters occurring during the manufacturing process are used for the dissolving of monoaluminium phosphate.

3. A method as claimed in claim 1 or 2, characterised in that a paper which is siliconized on one side and which has a gram number of 60-70 g/m$^2$, is used as a separating means between the threeply charge and the heating plates of the press.

4. A method as claimed in one of the claims 1, 2 or 3, characterised in that vermiculite having a grain size of from 0.35 to 1 mm, and expanded perlite having a grain size of up to 2.5 mm, are used.

## Revendications

1. Procédé de fabrication de plaques pour la construction, formées de trois couches d'une matière minérale expansée compactée et réfractaire, dans lequel des granulés de matière expansée, à savoir de vermiculite expansée ou de perlite expansée formant les couches externes et/ou de vermiculite expansée ou de perlite expansée formant la couche interne, sont encollés séparément avec du verre liquide comme liant minéral et/ou avec de la résine thermodurcissable et/ou avec du monophosphate d'aluminium, puis dans lequel ensuite sont empilées une première couche de vermiculite encollée ou de perlite encollée constituant 1/6' de l'épaisseur totale, puis la couche intermédiaire de vermiculite encollée ou de perlite encollée constituant environ 4/6 de la couche totale et enfin la deuxième couche de vermiculite encollée ou de perlite encollée constituant environ 1/6 de la couche totale et dans lequel cet empilage de trois couches, après pressage préalable est rigidifié par action de la pression et de la chaleur, caractérisé par les étapes opératoires :

a) d'emploi pour la construction des couches externes de la plaque, d'un mélange se composant de vermiculite expansée et de perlite expansée et d'une solution de verre liquide à 48-50° Bé et d'urée, avec laquelle la vermiculite ou la perlite sont encollées, ladite solution présentant une teneur en substances solides jusqu'à 41 % et le mélange une teneur en humidité jusqu'à 40 %, ces teneurs étant exprimées par rapport au poids à l'état de siccité absolue de la vermiculite ou de la perlite ;

b) d'emploi pour la couche intermédiaire de la plaque, de vermiculite expansée et/ou de perlite expansée et de déchets qui proviennent essentiellement des chutes sèches au cours de la production, à savoir au cours de l'expansion et du refroidissement des granulats, ainsi que de la poussière qui tombe au détourage des bordures des plaques et qui proviennent également des chutes de détourage broyées, ledit mélange de vermiculite et/ou de perlite et des déchets étant imprégnés par action d'une solution à environ 70 % de résine phénolique puis encollé par une solution à 50 % de monophosphate d'aluminium et d'urée, dans laquelle couche intermédiaire la teneur en corps solides des deux constituants atteint 24 %, exprimé par rapport au poids à l'état de siccité absolue du mélange, le rapport des substances solides de la résine phénolique aux substances solides du monophosphate d'aluminium est de 40 : 60, l'humidité du mélange encollé atteint 18 % et le mélange dont elle est formée contient jusqu'à 17,5 % de moins de substances solides comme liant et jusqu'à 23,4 % de moins comme humidité que le granulat de vermiculite encollée ou de perlite encollée formant la couche externe ;

c) les constituants qui servent de liant sont chauffés avant l'encollage à une température de 25 à 30 °C et ensuite projetés par pulvérisation séparément sur les granulats, ces granulats expansés tombant en nappe dans un brouillard de ce liant produit par des pistolets d'injection ;

d) la rigidification de l'empilage des trois couches à une température comprise entre 170 et 210 °C, est conduite de telle façon que partant d'une pression de pressage initiale, la pression exercée par les plaques de chauffage sur la plaque à presser soit réduite à l'intérieur des intervalles de temps définis.

2. Procédé selon la revendication 1, caractérisé en ce que l'on utilise toutes les eaux de rejet qui apparaissent au cours de la production, pour dissoudre le monophosphate d'aluminium.

3. Procédé selon la revendication 1 ou 2, caractérisé en ce que l'on utilise, comme moyen de séparation entre l'empilage des trois couches et la plaque de chauffe de la presse, un papier siliconé sur une face et présentant un grammage de 60 à 70 g/m².

4. Procédé selon l'une des revendications 1 à 3, caractérisé en ce que la vermiculite employée présente une granulométrie de 0,35 à 1 mm et la perlite expansée une granulométrie atteignant 2,5 mm.

Fig. 1

Intervalle im Pressvorgang / Sek./

0 043 144

Fig.2

Fig: 3

Siehe Fig.4, Pos 24

0 043 144

Fig. 4